# EUROPÄISCHE PATENTSCHRIFT

(11) **EP 4 348 060 B1**
(45) Veröffentlichungstag und Bekanntmachung des Hinweises auf die Patenterteilung: **09.07.2025**
(21) Anmeldenummer: 22730449.0
(22) Anmeldetag: 24.05.2022
(51) Int. Cl.: F04D 29/58, H02P 29/62

(54) **ANSTEUERVERFAHREN FÜR EINEN BEHEIZTEN VENTILATOR**
CONTROL METHOD FOR A HEATED FAN
PROCÉDÉ DE COMMANDE D'UN VENTILATEUR CHAUFFÉ

(30) Priorität: 27.05.2021 DE 102021205373
(43) Veröffentlichungstag der Anmeldung: 10.04.2024
(73) Patentinhaber: Robert Bosch GmbH, 70442 Stuttgart (DE)
(72) Erfinder: MATHE, Laszlo, 1171 Budapest (HU); LAMBERT, Zoltan, 7100 Szekszard (HU); BIHARI, Attila, 2721 Pilis (HU)
(86) Internationale Anmeldenummer: PCT/EP2022/064047
(87) Internationale Veröffentlichungsnummer: WO 2022/248468

(56) Entgegenhaltungen:
- WO-A1-2012/022549
- WO-A1-2013/160142
- DE-A1- 102009 055 335
- DE-A1- 19 902 267

## Beschreibung

Die Erfindung betrifft ein Ansteuerverfahren für ein Gebläseeinrichtung für ein HVAC System, insbesondere eines Kraftfahrzeugs, eine Ansteuerelektronik und eine Gebläseeinrichtung.

### Stand der Technik

Bekannte Gebläseeinrichtungen werden derart angesteuert, dass möglichst wenig Wärme entsteht, die auch als Verlustwärme bezeichnet wird. Aus der DE10 2008 042897 A1 ist eine Gebläseeinrichtung für eine Klimaanlage bzw. eine Gebläseanlage in einem Fahrzeug bekannt. Hier ist aufgezeigt, dass zusätzliche Vorrichtungen benötigt werden um die Verlustwärme von der Gebläseeinrichtung abzuführen. Zur Kühlung wird ein Teil des Luftstroms durch die Gebläseeinrichtung selbst geführt. Der Luftstrom nimmt dann die unerwünschte Verlustwärme auf. Weiter offenbart auch die DE199 02 267 A1 eine solche Gebläseeinrichtung.

Ferner ist bekannt zur Erwärmung des Innenraums eines Fahrzeugs die Luft des durch die Gebläseeinrichtung erzeugten Luftstroms mittels eines Verbrennungsmotors, eines Heizelements oder eines Wärmetauschers zu erwärmen. Hierzu müssen diese Komponenten zusätzlich vorgesehen werden und/oder der Luftstrom an diesen vorbeigeleitet werden. Dies bedeutet im Fall eines Verbrennungsmotors, dass die Luft erst erwärmt wird, wenn der Verbrennungsmotor selbst auf Temperatur gekommen ist. Heizelemente und Wärmetauscher stellen zusätzliche Bauteile dar, die Kosten verursachen.

### Offenbarung der Erfindung

Die Aufgabe der Erfindung besteht darin eine vereinfachte Möglichkeit zu bieten den Innenraum eines Fahrzeugs zu erwärmen.

Gelöst wird die Aufgabe mit einem Verfahren, einer Ansteuerelektronik und einer Gebläseeinrichtung nach einem der unabhängigen Ansprüche.

Das Ansteuerverfahren ist vorzugsweise für eine Gebläseeinrichtung, insbesondere ein HVAC-Gebläseeinrichtung vorgesehen. Die Gebläseeinrichtung kommt insbesondere bei Kraftfahrzeugen zum Einsatz. Der erzeugte Luftstrom transportiert insbesondere Luft aus der Umgebung des Kraftfahrzeugs in das Innere des Kraftfahrzeugs. Im Umluft Betrieb wird die Luft aus dem Innenraum des Kraftfahrzeugs entnommen. Die Gebläseeinrichtung weist zumindest einen elektrischen Motor auf, der eine Lüftereinrichtung antreibt, welche angetrieben durch den elektrischen Motor einen Luftstrom erzeugt. Der erzeugte Luftstrom durchströmt und/oder umströmt zumindest in Teilen den elektrischen Motor bzw. Bauteile oder Komponenten von diesem.

Das Erfindungsgemäße Ansteuerverfahren umfasst die folgenden Verfahrensschritte.

In einem Verfahrensschritt erfolgt das Ansteuern des elektrischen Motors derart, dass mittels der Lüftereinrichtung einen Luftstrom erzeugt wird. Vorzugsweise wird hier mittels eine elektrischen Kommutators die Wicklungen des elektrischen Motors derart bestromt, dass ein magnetisches Drehfeld entsteht, welches den Rotor des Motors mitnimmt. Es wird ein Magnetfeld erzeugt, welches wiederum eine tangential auf den Rotor wirkende Kraft erzeugt.

In einem Verfahrensschritt erfolgt das Erfassen der Temperatur der Luft, insbesondere der Umgebungsluft, vorzugsweise der Luft die den Luftstrom bildet. Das Erfassen umfasst hierbei das Messen mittels eines Temperatursensors, als auch das Abfragen oder Empfangen der erfassten Temperatur als Information von einer anderen Komponente des Fahrzeugs.

In einem weiteren Verfahrensschritt erfolgt das Verändern der Ansteuerung des elektrischen Motors in Abhängigkeit von der erfassten Temperatur der Luft, insbesondere der Umgebungsluft derart, dass der elektrische Motor eine erhöhte Abwärme erzeugt, die den erzeugten Luftstrom erwärmt. Vorzugsweise wird die Ansteuerung derart verändert, dass der Luftstrom im Wesentlichen gleichbleibt, insbesondere nicht zu- oder abnimmt. Die geförderte Luftmenge bleibt gleich. Es erfolgt keine wesentliche Änderung des Luftstroms, insbesondere der geförderten Luftmenge durch das Verändern des Luftstroms. Optional nimmt der Luftstrom, insbesondere die geförderte Luftmenge nur unwesentlich zu.

Vorteilhaft ist, dass durch die Anwendung des Verfahrens keine zusätzlichen Bauteile, wie Wärmetauscher oder Zusatzheizungen benötigt werden, insbesondere diese von ihrer Leistung geringer ausgelegt werden können. Auch wird die Komplexität des gesamten HVAC System stark vereinfacht. Ferner kann hierdurch auch die Gebläseeinrichtung selbst aufgetaut werden. Die Gebläseeinrichtung wirkt als Wärmequelle.

Weitere bevorzugte Ausführungsformen sind in den Unteransprüchen beschrieben.

Als vorteilhafte Weiterbildung ist anzusehen, dass der elektrische Motor in einem, bezüglich der Erzeugung der Drehbewegung, weniger effizienten Modus betrieben wird. Die Energieeffizienz bezogen auf die Drehbewegung nimmt ab. Trotz Erhöhung der zugeführten Leistung führt diese nicht zu einer Erhöhung des Drehmoments oder der Drehzahl. Vorzugsweise wird die zusätzliche Leistung, die insbesondere dem elektrischen Motor zugeführt wird, in Wärme umgewandelt. Die Effizienz bezogen auf die Drehbewegung sinkt.

Eine vorteilhafte Weiterbildung ist, dass die Veränderung der Ansteuerung in Abhängigkeit von einer Solltemperatur des Innenraums des Kraftfahrzeugs erfolgt. Vorzugsweise soll das Verfahren dazu beitragen die Temperatur im Innenraum zu erhöhen. Vorzugsweise erfolgt die Veränderung der Ansteuerung in Abhängigkeit von der Solltemperatur im Innenraum. Gemäß einer Weiterbildung erfolgt die Ansteuerung in Abhängigkeit von der Ist-Temperatur im Innenraum. Hierdurch kann das Verändern der Ansteuerung sehr präzise eingestellt werden. Gemäß einer Weiterbildung erfolgt die Ansteuerung in Abhängigkeit von der Differenz zwischen erfasster Temperatur der Luft und der im Fahrzeuginnenraum gemessenen Temperatur, sowie insbesondere der Solltemperatur im Fahrzeuginnenraum.

Eine vorteilhafte Weiterbildung ist, dass insbesondere in Abhängigkeit, von der Veränderung der Ansteuerung der Strom, vorzugsweise die Leistung erhöht wird. Der Strom ist der Strom, der dem Motor, insbesondere den Motorwicklungen zugeführt wird. Das Verändern der Ansteuerung umfasst insbesondere das Verändern, vorzugsweise verringern, des Vorkommutierungswinkels. In Abhängigkeit bedeutet insbesondere gleichzeitig und/oder in gleichen Schritten und/oder mit einem vorgegebenen Verhältnis zueinander und/oder entsprechend einer Tabelle und/oder entsprechend einer Funktion und/oder einem Diagramm. Vorteilhaft wird so mehr Wärmeleistung erzeugt, der Motor gleichzeitig keine Erhöhung der Drehzahl oder des Drehmoments erfahren muss. Ist jedoch gleichzeitig auch eine Erhöhung der Drehzahl oder des Drehmoments gewünscht, wird dies durch das Verändern des Vorkommutierungswinkels und des zugeführten Stroms eingestellt.

Eine vorteilhafte Weiterbildung ist, dass die Veränderung der Ansteuerung durch das Einstelleneines Vorkommutierungswinkel erfolgt. Insbesondere wird der Vorkommutierungswinkel geändert. Die Änderung erfolgt in Richtung 0 Grad. Insbesondere wird der Vorkommutierungswinkel verändert wodurch die Leistung vermehrt in Wärmeleistung anstelle von Drehleistung umgewandelt wird. Insbesondere verändert sich die in Wärme umgewandelte Energie in Abhängigkeit von dem veränderten Vorkommutierungswinkel.

Eine vorteilhafte Weiterbildung ist, dass eine Ansteuerelektronik ausgebildet ist, welche den elektrischen Motor ansteuert. Die Ansteuerelektronik ist ausgebildet und/oder eingerichtet, in Abhängigkeit von der erfassten Temperatur der Luft, in einem weniger effizienten Modus, bezogen auf die Drehbewegung, betrieben zu werden, wobei die dabei entstehende zusätzliche Abwärme der Ansteuerelektronik ebenfalls von dem erzeugten Luftstrom aufgenommen wird.

Unter bewusst weniger Effizienz ist hierbei zu verstehen, dass das Verhältnis von umgewandelter Energie in Drehbewegung oder Wärme sich zur Wärme hin verschiebt. Dies erfolgt absichtlich durch ein gezieltes, bzw. bewusstes, insbesondere gewünschtes verändern der Ansteuerung.

Eine weitere vorteilhafte Weiterbildung ist, dass die Temperatur der Luft zu Beginn des Betriebs mittels einem Sensor erfasst wird, der auf einer Ansteuerelektronik angeordnet ist. Vorzugsweise wird die Temperatur der Luft erfasst, die den Luftstrom bildet. Insbesondere wird die Luft vor oder nach dem durchströmen und/oder umströmen des elektrischen Motors erfasst.

Eine vorteilhafte Weiterbildung ist, dass der Vorkommutierungswinkel bei Erreichen einer ersten Temperatur des Motors oder der Ansteuerelektronik verändert, insbesondere erhöht, wird. Insbesondere zusätzlich wird die dem elektrischen Motor zugeführte Leistung, vorzugsweise die in die Wicklungen geleitete elektrische Leistung, verringert.

Ferner betrifft die Erfindung eine Ansteuerelektronik zum Ansteuern einer Gebläseeinrichtung, die ausgebildet und eingerichtet ist, das erfindungsgemäße Verfahren auszuführen. Vorzugsweise weist die Ansteuerelektronik zumindest einen Mikroprozessor auf, der ausgebildet und eingerichtet ist, dass Verfahren auszuführen. Vorzugsweise führt der Mikroprozessor das Verfahren aus.

Die Erfindung betrifft auch eine Gebläseeinrichtung, insbesondere einem HVAC-Gebläse für ein Kraftfahrzeug, wobei die Gebläseeinrichtung zumindest einen elektrischen Motor, eine Lüftereinrichtung und eine Ansteuerelektronik aufweist. Wobei die Ansteuerelektronik ausgebildet und eingerichtet ist, den elektrischen Motor anzusteuern und das Verfahren auszuführen.

Es wird als Weiterbildung vorgeschlagen, dass mindestens ein Temperatursensor, insbesondere zur Erfassung der Temperatur des elektrischen Motors und/oder der Ansteuerelektronik, ausgebildet ist, wobei die Veränderung der Ansteuerung in Abhängigkeit von dem erfassten Temperaturwert des Temperatursensors erfolgt. Vorzugsweise erfolgt die Veränderung in Abhängigkeit von der erfassten Temperatur der Luft des Luftstroms und/oder der Solltemperatur, insbesondere im Innenraum, und/oder der Ist-Temperatur im Innenraum.

Ausführungsformen der Erfindung werden nachstehend anhand der schematischen Figuren der Zeichnung näher erläutert. Es zeigen:
Figur 1 einen Längsschnitt durch ein Gebläseeinrichtung 1 und
Figur 2 ein Ablaufdiagramm des erfindungsgemäßen Steuerverfahrens.

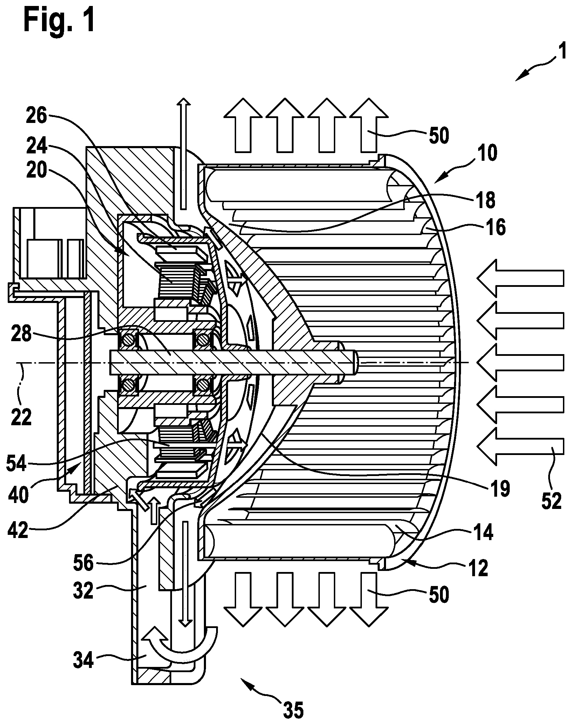

Figur 1 zeigt einen Längsschnitt durch ein erfindungsgemäße Gebläseeinrichtung 1. Das Gebläseeinrichtung 1 ist insbesondere als ein HVAC- Gebläse ausgebildet, bzw. kann als solches eingesetzte werden.

Unter HVAC-Systeme sind Heating, Ventilation and Air-Conditioning, also Heizung-, Lüftung- und Klimatechnik-Systeme zu verstehen. Entsprechend sind HVAC-Komponenten Komponenten für HVAC System. Die HVAC Gebläseeinrichtung ist ein Heizungs-, Lüftung- und/oder Klimatechnik-Komponente. Die Gebläseeinrichtung 1 ist dafür vorgesehen und entsprechend ausgebildet einen, insbesondere mindestens einen, Luftstrom 50 zu erzeugen. Die Gebläseeinrichtung 1 saugt insbesondere Umgebungsluft 52 oder Umluft an. Der erzeugte Luftstrom 50 wird insbesondere mittels Kanäle in einen Innenraum eines Kraftfahrzeugs geleitet. Insbesondere wird mittels der Gebläseeinrichtung 1 Frischluft in den Fahrzeuginnenraum gefördert.

Die Gebläseeinrichtung 1 weist eine Lüftereinrichtung 10 und einen elektrischen Motor 20 auf. Der elektrische Motor 20 und die Lüftereinrichtung 10 sind derart miteinander verbunden, dass der elektrische Motor 20 die Lüftereinrichtung 10 um eine Drehachse 22 drehen kann. Vorzugsweise sind die Lüftereinrichtung 10 und der elektrische Motor 20 über eine Welle 28, bzw. eine Achse verbunden. Die Welle und/oder Achse 28 überträgt die Drehbewegung an die Lüftereinrichtung. Optional kann die Lüftereinrichtung 10 auch direkt mit Teilen des elektrischen Motors 20 verbunden sein. Dies ist insbesondere der Fall, wenn es sich um einen Außenläufermotor handelt bei dem der Rotor 26 den Stator 24 radial umgibt. Bei einem Außenläufermotor ist der Rotor 26 direkt mit der Lüftereinrichtung 10 verbunden.

Die Lüftereinrichtung 10 ist ausgebildet mittels Drehbewegung einen Luftstrom 50 zu erzeugen. Die Lüftereinrichtung 10 weist insbesondere ein Lüfterrad 12 auf. Das Lüfterrad 12 umfasst mehrere, insbesondere eine Vielzahl, von Luftschaufeln 14, die sich in Figur 1 beispielshaft in axialer Richtung erstrecken. Denkbar ist auch eine Erstreckung in radialer oder tangentialer Richtung. Gemäß Figur 1 ein wird die Luft stirnseitig angesaugt und radial ausgeblasen. Bei einer anderen Erstreckung der Lüfterschaufeln 14 ergeben sich entsprechende Ansaug- und Ausblasrichtungen.

Die Lüfterschaufeln 14 sind beispielhaft in einem Umfang um die Drehachse 22 angeordnet. Auf der dem elektrischen Motor 20 abgewandten Seite sind die Lüfterschaufeln 14 durch einen umlaufenden äußeren Rand 16 zusammengehalten. Der äußere Rand 16 ist vorzugsweise der Ansaugseite zugerichtet. Der äußere Rand 16 ist hierbei optional.

Auf der dem Motor 20 zugerichteten Seite enden die Lüfterschaufeln 14 auf einer domartig gewölbten Bodenplatte 18. In der domartig gewölbten Bodenplatte 18 sind optional Aussparrungen, bzw. Ausnehmungen ausgebildet. Die Ausnehmungen erlauben insbesondere einen Luftstrom vom und/oder zum elektrischen Motor 20.

Optional ist gemäß Figur 1 zumindest eine zweite Lüfterschaufel 19 auf der dem Motor 20 zugewandten Seite der Bodenplatte ausgebildet. Die zweite Lüfterschaufel 19 bewirkt einen Luftstrom 54 durch den elektrischen Motor 20. Insbesondere unterstützt sie die Bildung eines Luftstroms 54 durch den elektrischen Motor 20. Die zweite Lüfterschaufel 19 bewirkt durch eine Drehbewegung um die Drehachse 22 ein Ansaugen von Luft aus dem elektrischen Motor 20, insbesondere ein stirnseitiges Ansaugen und radiales ausblasen 56. Der radial ausgeblasene Luftstrom 56 der zweiten Lüfterschaufel 19 verbindet sich mit dem Luftstrom des Lüftereinrichtung 10 zu einem Luftstrom. Insbesondere wird der Luftstrom durch den elektrischen Motor 20 erzeugt. Gemäß einer Weiterbildung sind mehrere zweite Lüfterschaufeln 19 ausgebildet.

Der elektrische Motor 20 umfasst einen Stator 24 und einen Rotor (Läufer) 26. Der Rotor 26 ist am Stator 24 drehbar um die Drehachse 22 gelagert und drehmomentschlüssig mit der Lüftereinrichtung 10 verbunden. In unterschiedlichen Ausführungsformen kann der Stator 24 radial außerhalb oder radial innerhalb des Rotors 26 angeordnet sein.

In der dargestellten Ausführungsform liegt der Stator 24 innen und der Rotor 26 außen. Der Rotor 26 umgibt den Stator koaxial. Ein solcher elektrischer Motor 20 wird auch als Außenläufermotor bezeichnet.

Der Stator 24 weist mehrere Wicklungen, insbesondere Spulen, auf, die einzeln oder gemeinsam bestromt werden können. Die Wicklungen sind insbesondere auf einen Statorzahn aufgewickelt. Die bestromten Wicklungen erzeugen ein magnetisches Feld. Das magnetische Feld wird insbesondere vom Statorzahn zum Rotor geführt. Insbesondere wird das erzeugte magnetische Feld gedreht, was dazu führt, dass der Rotor mitgerissen wird. Das magnetische Drehfeld wird mittels eines elektrischen Kommutators erzeugt.

Das magnetische Feld erzeugt eine Kraft, die auf den Rotor 26 wirkt. Insbesondere kann der Rotor 26 selbst Wicklungen oder Magnete, insbesondere Permanentmagnete, aufweisen. Gleichzeitig entsteht durch den Stromfluss in den Wicklungen und dessen elektrischen Wiederstand Wärme. Bei bekannten elektrischen Motoren 20 wird die Ansteuerung derart gewählt, dass eine möglichst geringe Abwärme entsteht und möglichst viel Energie in Drehbewegung und nicht in Wärme umgewandelt wird. Die entstehende Wärme wird normalerweise als unerwünschtes Abfallprodukt gewertet. Es wird daher versucht den Motor 20 möglich so Effizient anzusteuern oder auszulegen, dass die erzeugte Abwärme so gering wie möglich ist.

Ferner weist das Gebläseeinrichtung 1 optional eine Modulgehäuse 30 auf. Das Modulgehäuse 30 ist dafür ausgebildet das Gebläseeinrichtung 1 an weiteren HVAC-Komponenten und/oder generell am Fahrzeug zu befestigen.

Optional weist das Modulgehäuse 30 auch Luftstromführungselemente 32 auf. Insbesondere weist es einen Kanal 32 auf. Das Modulgehäuse 30 weist insbesondere eine Aussparung 34 auf. Die Aussparung 34 bildet den Anfang des Kanals 32. Die Aussparung ist radial außerhalb des Umrisses der Lüftereinrichtung 10 ausgebildet. Der Kanal führt zu dem elektrischen Motor 20. Insbesondere führt der Kanal zu einem axial unteren Ende des elektrischen Motors 20. Der Kanal 32 bildet eine Luftführung. Im Anschluss an den Kanal verläuft die Luftführung von dem unteren Ende des elektrischen Motors 20 durch diesen hindurch, bzw. an diesem vorbei. Der Luftstrom aus dem Kanal 32 wird durch den Motor 20 hindurch zu der Lüftereinrichtung, optional den zweiten Lüfterschaufeln 19 geführt. Anschließend verläuft die Luftführung durch die Aussparungen in der Bodenplatte 18 hindurch.

Vorzugsweise weist der Rotor 26 ein Polgehäuse auf. An diesem sind insbesondere Magnete angeordnet. Durch zumindest eine Öffnung in dem rotierenden Polgehäuse strömt die Luft unterhalb der Lüftereinrichtung 10 aus.

Ein Teil des Luftstroms, der von der Lüftereinrichtung 10 erzeugt wird, wird durch den elektrischen Motor 20 geleitet, insbesondere an Komponenten, wie den Wicklungen des elektrischen Motors 20 vorbei geleitet. Der Luftstrom nimmt Wärmeenergie auf und kühlt damit die Komponenten des elektrischen Motors 20. Es erwärmt sich die Luft des Luftstroms. Die erwärmte Luft wird anschließen der Luft des Luftstrom 50 wieder zugeführt und erwärmt dann auch diese.

Ferner weist das Gebläseeinrichtung 1 eine Ansteuerelektronik 40 auf. Die Ansteuerelektronik 40 ist ausgebildet und eingerichtet die Wicklungen des elektrischen Motors 20 derart anzusteuern, dass dieser einer Drehbewegung ausführen kann. Die Ansteuerelektronik 40 weist hierbei Leistungsbauelemente, insbesondere Leistungsschalter auf, welche beispielsweise als H6 oder B4 Brücke verschaltet sind.

Die Ansteuerelektronik 40 erzeugt im Betrieb ebenfalls Abwärme. Auch hier wird gemäß Stand der Technik versucht, die Abwärme so gering als möglich zu halten. Vorzugsweise ist die Ansteuerelektronik derart angeordnet, dass diese ihre Abwärme ebenfalls an die Luft des Luftstroms durch das Modulgehäuse 30 abgeben kann. Gemäß Figur 1 ist ein Kühlkörper 42 ausgebildet, der die Wärme von der Ansteuerelektronik 40 weg zu dem Luftstrom im Modulgehäuse 30 leitet.

Die Ansteuerelektronik 40 weist optional einen Temperatursensor auf. Der Temperatursensor misst die Temperatur der Ansteuerelektronik 40. Auch kann der Temperatursensor vor einem Kaltstart die Temperatur der Umgebungsluft ermitteln.

Die Temperatur der Ansteuerelektronik 40 und/oder des Motors 20 wird insbesondere ermittelt um einen Schutz gegen Überhitzung zu gewährleisten. Die Temperatursensoren können während des Anlaufs niedrige Umgebungstemperatur erfassen und unterhalb einer bestimmten Umgebungstemperatur.

Die Ansteuerelektronik 40 kommuniziert über LIN oder CAN oder einem anderen Kommunikationsverfahren mit dem Hauptkörperrechner, der spezielle Betriebsmodi und Befehle unterstützen kann.

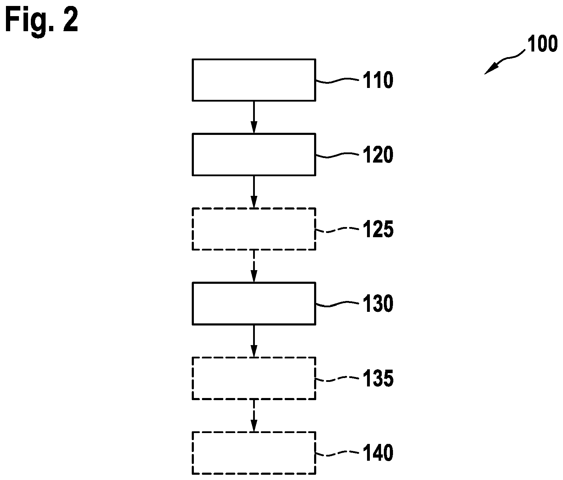

In Figur 2 ist eine erfindungsgemäßes Ansteuerverfahren 100 in einem Ablaufdiagramm dargestellt.

In einem ersten Verfahrensschritt 110 wird der elektrische Motor 20 derart angesteuert, dass er eine Drehbewegung erzeugt. Hierbei werden die elektrischen Wicklungen des elektrischen Motors 20, insbesondere des Stators 24, derart bestromt, dass ein magnetisches Feld erzeugt wird. Das magnetische Feld bewirkt eine Kraft. Die Kraft wirkt auf den Rotor 25, bzw. dessen Magnete oder Wicklungen. Vorzugsweise wird ein Vorkommutierungswinkel gewählt, der bewirkt das maximale Leistung in Drehbewegung umgewandelt wird. Vorzugsweise wird ein Vorkommutierungswinkel im Bereich von 90 Grad gewählt. Hierbei wird mit dem größten Teil der Energie eine Kraft in tangentialer Richtung erzeugt. Diese Kraft bewirkt ein Drehen des Motors. Insbesondere im Fall eines Vorkommutierungswinkels mit 0 Grad, ist die Kraft radial nach außen gerichtet. Diese Kraft bewirkt wenig bis keine Drehung. Es wird daher die Energie überwiegend in Wärme umgewandelt. Es wird ein magnetisches Drehfeld erzeugt, welches den Rotor 26 mitnimmt. Die Kraft bewirkt eine Drehbewegung.

Vorzugsweise wird versucht, den elektrischen Motor 20 derart anzusteuern, dass dieser bezogen auf die Drehbewegung einen optimalen Wirkungsgrad aufweist.

Vorzugsweise wird in einem effizienten Betrieb ein Vorkommutierungswinkel eingestellt. Die Vorkommutierungswinkel hat das Ziel die Effizienz zu verbessern.

Ferner ist eine häufig verwendete Technik um die Effizienz zu erhöhen die Feldschwächung. Bei der Feldschwächung wird oberhalb einer bestimmten Drehzahl das Rotormagnetfeld verringert, so reduziert sich die induzierte Spannung (BEMF), so dass eine höhere Drehzahl als die Nenndrehzahl des Motors erreicht wird. Dies ist möglich, weil die Ströme des Stators in Iq-Strom zerlegbar sind, der ein Drehmoment erzeugt, und ein Id-Strom (90° rotiert), der eine Radialkraft erzeugt. Die Radialkraft bewirkt wenig bis keine Drehbewegung. Die Energie wird daher überwiegend in Wärme umgewandelt.

In einem weiteren Verfahrensschritt 120 wird die Temperatur der Luft erfasst. Hierbei wird insbesondere die Temperatur der Umgebungsluft und/oder der Luft, welche den Luftstrom bildet, erfasst. Vorzugsweise wird die Temperatur vor dem umströmen und/oder durchströmen des elektrischen Motors 20 erfasst. Insbesondere wird die Temperatur vor dem Erwärmen erfasst. Die Temperatur wird hierbei insbesondere durch einen Temperatursensor ermittelt, welcher auf der Ansteuerelektronik oder am Gebläseeinrichtung 1 angeordnet ist. Optional kann auch ein weiterer Temperatursensor ausgebildet sein. Ein Ermitteln erfasst auch ein Abfragen, beispielsweise mittels Kommunikation (LI, CAN usw.) von einer anderen Fahrzeugkomponente.

In einem weiteren Verfahrensschritt 130 wird die Ansteuerung des elektrischen Motors 20 verändert. Insbesondere erfolgt die Änderung durch die Ansteuerelektronik 40. Die Änderung erfolgt in Abhängigkeit von der erfassten Temperatur der Luft. Insbesondere von der im Verfahrensschritt 120 erfassten Umgebungslufttemperatur und/oder der Temperatur der bei der Gebläseeinrichtung 1 ankommenden Luft.

Die Veränderung der Ansteuerung des elektrischen Motors 20 bewirkt, dass der elektrische Motor 20 hierbei bezüglich der Erzeugung der Drehbewegung weniger Effizienz ist. Durch die geringere Effizienz bezogen auf die Drehbewegung steigt der Anteil an Energie die in Wärme umgewandelt wird.

Alternativ oder zusätzlich kann dem elektrischen Motor 20 mehr Energie zugeführt werden, die jedoch nicht in mehr Drehmoment oder mehr Drehzahl umgewandelt wird. Die Änderung der Ansteuerung und das erhöhen der zugeführten Energie, bzw. Leistung sind aneinandergekoppelt. Die zugeführte Leistung/Energie wird durch Erhöhen des Stroms erreicht. Stattdessen wird die zusätzliche Energie in Wärme umgewandelt. Es kann beispielsweise bei einem 12V Bordnetz und einem Strom von 170A eine Abwärme in der Größenordnung von 2KW erzeugt werden. Die Zusätzliche Wärme wird hierbei durch den erhöhten Stromfluss erzeugt. Bei einem 24 V oder 48 V Bordnetz erhöhen sich entsprechend die Leistungen.

Vorzugsweise wird die Energie erhöht, welche dem Motor zugeführt wird. Die dem Motor zugeführte elektrische Leistung wird vorzugsweise erhöht. Gleichzeitig wird die Ansteuerung des Motors 20 derart verändert, dass die Drehbewegung sich im Wesentlichen nicht verändert. Insbesondere bleibt Drehzahl und/oder das Drehmoment im Wesentlichen gleich.

Insbesondere wird der Id Anteil erzeugt, insbesondere erhöht. Der im Gegensatz zum Iq Anteil nicht zum Drehmoment beiträgt.

Die Veränderung der Ansteuerung erfolgt insbesondere mittels einstellen eines Vorkommutierungswinkels. Die in den elektrischen Motor geleitete Energie wird bewusst weniger zur Drehmomentbildung und mehr zur Erzeugung von Wärme verwendet. Vorzugsweise wird der Vorkommutierungswinkel von 90° in Richtung 0° verändert. Im Bereich von 90° weist der Motor eine maximale Bildung eines tangentialen Magnetfelds auf, das wiederum ein Drehmoment bewirkt. Im Bereich von 0° ist die Bildung eines Magnetfelds verstärkt, dass eine radiale Kraft auf den Rotor bewirkt. Bei einem Magnetfeld, welches mit einer radialen Kraft auf den Rotor wirkt, wird keine, bzw. wenig Drehmoment erzeugt. Das Verhältnis aus Leistung in Wärme und Leistung in Drehbewegung wird in Richtung Leistung in Wärme verändert. Wird zusätzlich noch der Strom erhöht, so steigt durch den elektrischen Widerstand der Wicklungen auch die erzeugte Wärmeleistung.

Vorzugsweise wird der Motor mit einer Kommutierung angesteuert, die für die Drehbewegung ungünstig ist. Vorzugsweise kann gleichzeitig der zugeführte Strom erhöht werden, wodurch die erzeugte Wärmeleistung zunimmt. Vorzugsweise kann die zugeführte Leistung mit der Minimierung des Vorkommutierungswinkels erhöht werden, ohne eine nennenswerte Erhöhung der Drehzahl oder des Drehmoments zu bewirken.

In einem optionalen Verfahrensschritt 125 wird die Solltemperatur für den Innenraum des Kraftfahrzeugs ermittelt. Ist die Solltemperatur ermittelt, so fliest diese in die Veränderung der Ansteuerung gemäß Verfahrensschritt 130 ein. Ermitteln erfasst auch ein Abfragen, beispielsweise mittels Kommunikation (LI, CAN usw.) von einer anderen Fahrzeugkomponente.

In Verfahrensschritt 130 erfolgt dann die Veränderung zusätzlich in Abhängigkeit von der Solltemperatur und/oder Ist-Temperatur, insbesondere des Innenraums. Mit zunehmenden Annähern an die Solltemperatur wird die Veränderung der Ansteuerung reduziert, insbesondere wird der dem Motor zugeführte Strom reduziert und/oder der Vorkommutierungswinkel erhöht. Das reduzieren des Stroms bewirkt eine Reduzierung der Leistung. Beim Erreichen der Solltemperatur kann die Veränderung derart reduziert werden, dass lediglich so viel Wärme erzeugt wird, um die Temperatur innerhalb des Innenraums zu halten. Optional wird bei Erreichen der Solltemperatur die Änderung der Ansteuerung beendet. Der elektrische Motor wird dann wieder in einem bezogen auf die Drehbewegung effizienten Modus betrieben.

In einem weiteren optionalen Verfahrensschritt 135 wird die Ansteuerelektronik 40 ebenfalls in einem, bezogen auf die Drehbewegung, weniger effizienten Modus betrieben. Dies führt zur Erzeugung von zusätzlicher Abwärme. Die den Luftstrom zusätzlich erwärmt.

In einem weiteren optionalen Verfahrensschritt 140 wird in Abhängigkeit einer weiteren erfassten Temperatur, insbesondere der Temperatur des elektrischen Motors 20 und/oder der Ansteuerelektronik 40 eine Veränderung der Ansteuerung angepasst. Dies wird insbesondere durchgeführt um ein Überhitzen der Komponenten zu verhindern. Insbesondere wird beim Erreichen einer ersten Grenztemperatur die Veränderung der Ansteuerung angepasst. Insbesondere wird der Strom reduziert und/oder der Vorkommutierungswinkel angepasst.

## Patentansprüche

1. Ansteuerverfahren (100) für eine Gebläseeinrichtung (1), insbesondere ein HVAC-Gebläse für ein Kraftfahrzeug, wobei die Gebläseeinrichtung (1) zumindest einen elektrischen Motor (20) aufweist, der eine Lüftereinrichtung (10) antreibt, welche einen Luftstrom erzeugt, und dass der erzeugte Luftstrom zumindest in Teilen den elektrischen Motor (20) umströmt und/oder durchströmt, aufweisend den Schritt:
• Ansteuern (110) des elektrischen Motors (20) derart, dass mittels der Lüftereinrichtung (10) ein Luftstrom (50) erzeugt wird, wobei das Ansteuerverfahren **gekennzeichnet ist durch** die folgenden weiteren Schritte:
• Erfassen (120) der Temperatur der Luft,
• Verändern (130) der Ansteuerung des elektrischen Motors (20) in Abhängigkeit von der erfassten Temperatur der Luft derart, dass der elektrische Motor (20) eine erhöhte Abwärme erzeugt, die die Luft des erzeugten Luftstroms (50) erwärmt.

2. Ansteuerverfahren (100) nach dem vorhergehenden Anspruch, **dadurch gekennzeichnet, dass** die Veränderung der Ansteuerung derart erfolgt, dass der elektrische Motor (20) in einem, bezüglich der Erzeugung der Drehbewegung, weniger effizienten Modus betrieben wird.

3. Ansteuerverfahren (100) nach einem der vorhergehenden Ansprüche,
**dadurch gekennzeichnet, dass** die Veränderung der Ansteuerung in Abhängigkeit von einer erfassten Solltemperatur (125) des Innenraums des Kraftfahrzeugs erfolgt.

4. Ansteuerverfahren (100) nach einem der vorhergehenden Ansprüche,
**dadurch gekennzeichnet, dass** die Veränderung der Ansteuerung durch das Verändern eines Vorkommutierungswinkels, insbesondere das Verringern des Vorkommutierungswinkels, erfolgt.

5. Ansteuerverfahren (100) nach einem der vorhergehenden Ansprüche,
**dadurch gekennzeichnet, dass,** insbesondere in Abhängigkeit, von der Veränderung der Ansteuerung, insbesondere dem Verändern, vorzugsweise verringern, des Vorkommutierungswinkels, der dem Motor zugeführte Strom, insbesondere die zugeführte Leistung, erhöht wird.

6. Ansteuerverfahren (100) nach einem der vorhergehenden Ansprüche,
**dadurch gekennzeichnet, dass** eine Ansteuerelektronik (40) ausgebildet ist, welche den elektrischen Motor ansteuert, und dass die Ansteuerelektronik (40) ausgebildet und eingerichtet ist, in Abhängigkeit von der erfassten Temperatur der Luft in einem bewusst weniger effizienten Modus (135) betrieben zu werden, wobei die dabei entstehende zusätzliche Abwärme der Ansteuerelektronik (40) ebenfalls von der Luft des erzeugten Luftstroms aufgenommen wird.

7. Ansteuerverfahren (100) nach einem der vorhergehenden Ansprüche,
**dadurch gekennzeichnet, dass** die Temperatur der Luft zu Beginn des Betriebs mittels einem Temperatursensor erfasst wird, der auf einer Ansteuerelektronik (40) der Gebläseeinrichtung (1) angeordnet ist.

8. Ansteuerverfahren (100) nach einem der vorhergehenden Ansprüche,
**dadurch gekennzeichnet, dass** der Vorkommutierungswinkel bei Erreichen einer ersten Temperatur des Motors oder der Ansteuerelektronik (40) reduziert wird.

9. Ansteuerverfahren (100) nach einem der vorhergehenden Ansprüche,
**dadurch gekennzeichnet, dass** die Temperatur der Umgebungsluft und/oder der Luft des Luftstroms, insbesondere bevor sie den elektrischen Motor (20) umströmt und/oder durchströmt, erfasst wird.

10. Ansteuerelektronik (40) zum Ansteuern einer Gebläseeinrichtung (1), wobei die Ansteuerelektronik (40) ausgebildet und eingerichtet ist, das Verfahren (100) nach einem der vorhergehenden Ansprüchen auszuführen.

11. Ansteuerelektronik (40) nach dem vorhergehenden Anspruch, **dadurch gekennzeichnet, dass** die Ansteuerelektronik mindestens einen Mikroprozessor zum Ausführen des Verfahrens aufweist.

12. Gebläseeinrichtung (1), insbesondere einem HVAC-Gebläse für ein Kraftfahrzeug, wobei die Gebläseeinrichtung (1) zumindest einen elektrischen Motor (20), eine Lüftereinrichtung (10) und eine Ansteuerelektronik (40) aufweist, wobei die Ansteuerelektronik (40) ausgebildet und eingerichtet ist, den elektrischen Motor (20) anzusteuern und das Verfahren (100) gemäß einem der Ansprüche 1 bis 9 auszuführen

13. Gebläseeinrichtung (1) nach dem vorhergehenden Anspruch, **dadurch gekennzeichnet, dass** mindestens ein Temperatursensor, insbesondere zur Erfassung der Temperatur des elektrischen Motors (20) und/oder der Ansteuerelektronik (40), ausgebildet ist, wobei die Veränderung der Ansteuerung in Abhängigkeit von dem erfassten Temperaturwert des Temperatursensors erfolgt.

## Claims

1. Control method (100) for a blower device (1), in particular an HVAC blower for a motor vehicle, wherein the blower device (1) has at least one electric motor (20), which drives a ventilator device (10), which produces an air flow, and at least some of the produced air flow flows around and/or flows through the electric motor (20), the method comprising the following step:
• controlling (110) the electric motor (20) in such a way that an air flow (50) is produced by means of the ventilator device (10), wherein the control method is **characterized by** the following further steps:
• measuring (120) the temperature of the air,
• changing (130) the control of the electric motor (20) as a function of the measured temperature of the air in such a way that the electric motor (20) produces increased heat output, which heats the air of the produced air flow (50).

2. Control method (100) according to the preceding claim, **characterized in that** the control is changed in such a way that the electric motor (20) is operated in a less efficient mode with regard to the generation of the rotary movement.

3. Control method (100) according to either one of the preceding claims, **characterized in that** the control is changed as a function of a measured target temperature (125) of the interior of the motor vehicle.

4. Control method (100) according to any one of the preceding claims, **characterized in that** the control is changed by changing a pre-commutation angle, in particular decreasing the pre-commutation angle.

5. Control method (100) according to any one of the preceding claims, **characterized in that** the current supplied to the motor, in particular the power supplied, is increased in particular as a function of the change of the control, in particular the change, preferably decreasing, of the pre-commutation angle.

6. Control method (100) according to any one of the preceding claims, **characterized in that** a control electronics system (40) is formed, which controls the electric motor, and **in that** the control electronics system (40) is designed and configured to be operated in a deliberately less efficient mode (135) as a function of the measured temperature of the air, wherein the resulting additional heat output of the control electronics system (40) is also absorbed by the air of the produced air flow.

7. Control method (100) according to any one of the preceding claims, **characterized in that** the temperature of the air at the start of operation is measured by means of a temperature sensor, which is arranged on a control electronics system (40) of the blower device (1).

8. Control method (100) according to any one of the preceding claims, **characterized in that** the pre-commutation angle is decreased when a first temperature of the motor or the control electronics system (40) is reached.

9. Control method (100) according to any one of the preceding claims, **characterized in that** the temperature of the ambient air and/or the air of the air flow is measured, in particular, before it flows around and/or flows through the electric motor (20).

10. Control electronics system (40) for controlling a blower device (1), wherein the control electronics system (40) is designed and configured to carry out the method (100) according to any one of the preceding claims.

11. Control electronics system (40) according to the preceding claim, **characterized in that** the control electronics system has at least one microprocessor for carrying out the method.

12. Blower device (1), in particular an HVAC blower for a motor vehicle, wherein the blower device (1) has at least one electric motor (20), a ventilator device (10) and a control electronics system (40), wherein the control electronics system (40) is designed and configured to control the electric motor (20) and to carry out the method (100) according to any one of Claims 1 to 9.

13. Blower device (1) according to the preceding claim, **characterized in that** at least one temperature sensor is designed, in particular, for measuring the temperature of the electric motor (20) and/or the control electronics system (40), wherein the control is changed as a function of the measured temperature value of the temperature sensor.

## Revendications

1. Procédé de commande (100) destiné à un dispositif de ventilation (1), en particulier à un système HVAC d'un véhicule automobile, le dispositif de ventilation (1) présentant au moins un moteur électrique (20) qui entraîne un dispositif de ventilation (10) générant un flux d'air, et le flux d'air produit contournant et/ou traversant au moins en partie le moteur électrique (20), comprenant l'étape consistant à :
• commander (110) le moteur électrique (20) de telle sorte qu'un flux d'air (50) est produit au moyen du dispositif de ventilation (10), le procédé de commande étant **caractérisé par** les étapes supplémentaires suivantes :
• détecter (120) la température de l'air,
• modifier (130) la commande du moteur électrique (20) en fonction de la température détectée de l'air de telle sorte que le moteur électrique (20) dégage une chaleur accrue qui réchauffe l'air du flux d'air produit (50).

2. Procédé de commande (100) selon la revendication précédente, **caractérisé en ce que** la modification de la commande est effectuée de telle sorte que le moteur électrique (20) fonctionne dans un mode moins efficace en ce qui concerne la génération du mouvement de rotation.

3. Procédé de commande (100) selon l'une des revendications précédentes, **caractérisé en ce que** la modification de la commande est effectuée en fonction d'une température de consigne détectée (125) de l'habitacle du véhicule automobile.

4. Procédé de commande (100) selon l'une des revendications précédentes, **caractérisé en ce que** la modification de la commande est effectuée en modifiant un angle de précommutation, notamment en réduisant l'angle de précommutation.

5. Procédé de commande (100) selon l'une des revendications précédentes, **caractérisé en ce que** le courant fourni au moteur, en particulier la puissance fournie, est augmenté en particulier en fonction de la modification de la commande, en particulier de la modification, de préférence de la réduction, de l'angle de précommutation.

6. Procédé de commande (100) selon l'une des revendications précédentes, **caractérisé en ce qu'**une électronique de commande (40) est conçue pour commander le moteur électrique, et **en ce que** l'électronique de commande (40) est conçue et configurée pour fonctionner dans un mode volontairement moins efficace (135) en fonction de la température détectée de l'air, la chaleur supplémentaire ainsi dégagée par l'électronique de commande (40) étant également absorbée par l'air du flux d'air produit.

7. Procédé de commande (100) selon l'une des revendications précédentes, **caractérisé en ce que** la température de l'air est détectée au début du fonctionnement au moyen d'un capteur de température disposé sur une électronique de commande (40) du dispositif de ventilation (1).

8. Procédé de commande (100) selon l'une des revendications précédentes, **caractérisé en ce que** l'angle de précommutation est réduit lorsqu'une première température du moteur ou de l'électronique de commande (40) est atteinte.

9. Procédé de commande (100) selon l'une des revendications précédentes, **caractérisé en ce que** la température de l'air ambiant et/ou de l'air du flux d'air, en particulier avant qu'il ne contourne et/ou traverse le moteur électrique (20), est détectée.

10. Électronique de commande (40) destinée à commander un dispositif de ventilation (1), l'électronique de commande (40) étant conçue et configurée pour mettre en œuvre le procédé (100) selon l'une des revendications précédentes.

11. Électronique de commande (40) selon la revendication précédente, **caractérisée en ce que** l'électronique de commande comprend au moins un microprocesseur destiné à mettre en œuvre le procédé.

12. Dispositif de ventilation (1), en particulier un système HVAC pour un véhicule automobile, le dispositif de ventilation (1) présentant au moins un moteur électrique (20), un dispositif de ventilation (10) et une électronique de commande (40), l'électronique de commande (40) étant conçue et configurée pour commander le moteur électrique (20) et mettre en œuvre le procédé (100) selon l'une des revendications 1 à 9.

13. Dispositif de ventilation (1) selon la revendication précédente, **caractérisé en ce qu'**au moins un capteur de température est conçu, en particulier pour détecter la température du moteur électrique (20) et/ou de l'électronique de commande (40), la modification de la commande étant effectuée en fonction de la valeur de température détectée par le capteur de température.
